# EUROPEAN PATENT APPLICATION

(11) **EP 3 563 729 A1**
(43) Date of publication of application: **06.11.2019**
(21) Application number: 18170225.9
(22) Date of filing: 01.05.2018
(51) Int. Cl.: A47J 27/04, A23L 7/10, A47J 27/13

(54) **APPARATUS FOR SIMULTANEOUS COOKING OF WHITE RICE AND A WHOLE GRAIN PRODUCT**

(71) Applicant: Koninklijke Philips N.V., 5656 AE Eindhoven (NL)
(72) Inventor: TAN, Jingwei, 5656 AE Eindhoven (NL); CHEN, Yun, 5656 AE Eindhoven (NL); LU, Weihua, 5656 AE Eindhoven (NL)
(74) Representative: de Haan, Poul Erik

(57) **Abstract**

The present invention relates to an apparatus (10) for simultaneously cooking white rice and a whole grain product. It is described to receive (110) by an input unit a user preference relating to cooked white rice. It is described to contain (120) in a first container a whole grain product and contain in the first container a fluid for cooking the whole grain product. A first heater is configured to heat the first container. It is described to contain (130) in a second container white rice and contain in the second container a fluid for cooking the white rice. A second heater is configured to heat the second container. The first container is positioned adjacent to the second container. A dispenser is in fluid communication with the first container and in fluid communication with the second container. It is described to cook (140) under the control of a processing unit the whole grain rice and the white rice over a total cooking period according to the user preference. The total cooking period comprises a first cooking period during which at least some of the fluid in the first container is dispensed to the second container. It is described to control (150) by the processing unit the first and second heaters such that a temperature in the first container during the first cooking period is greater than a temperature in the second container at the same time point.

## Description

### FIELD OF THE INVENTION

The present invention relates to an apparatus for simultaneous cooking of white rice and a whole grain product, to a method for simultaneous cooking of white rice and a whole grain product, as well as to a computer program element.

### BACKGROUND OF THE INVENTION

The general background of this invention is the field of cooking rice and brown rice and other whole grain products. There is a dilemma relating to providing nutritious food products for human consumption. White rice is a staple food, and consumers like its appearance, smell, texture and taste, but its nutritional profile is quite limited, formed mostly by starch. Whilst brown rice has a better and richer nutritional profile, but consumers tend not to like its appearance, smell, texture and taste.

### SUMMARY OF THE INVENTION

It would be advantageous to have improved apparatus for cooking white rice and whole grain products.

The object of the present invention is solved with the subject matter of the independent claims, wherein further embodiments are incorporated in the dependent claims. It should be noted that the following described aspects and examples of the invention apply also for the apparatus for simultaneous cooking of white rice and a whole grain product, the method for simultaneous cooking of white rice and a whole grain product and for the computer program element and the computer readable medium.

According to a first aspect, there is provided an apparatus for the simultaneous cooking of white rice and a whole grain product, comprising:
- an input unit;
- a first container;
- a second container;
- a dispenser;
- a first heater;
- a second heater; and
- a processing unit.

The input unit is configured to receive a user preference relating to cooked white rice. The first container is configured to contain a whole grain product and contain a fluid for cooking the whole grain product. The second container is configured to contain the white rice and contain a fluid for cooking the white rice. The first container is positioned adjacent to the second container. The dispenser is in fluid communication with the first container and in fluid communication with the second container. The first heater is configured to heat the first container. The second heater is configured to heat the second container. The processing unit is configured to cook the whole grain rice and the white rice over a total cooking period according to the user preference. The total cooking period comprises a first cooking period during which at least some of the fluid in the first container is dispensed to the second container. The processing unit is configured also to control the first and second heaters such that a temperature in the first container during the first cooking period is greater than a temperature in the second container at the same time point.

In this way, a nutritional profile as well as flavour of white rice can be enriched by transferring nutrients and flavour elements from a whole grain product. Thus, water soluble fibre, vitamins, and minerals and pigments that can be antioxidants can be extracted from the whole grain product and into the water being used to cook the whole grain product. Some of this fluid is then transferred to the container in which white rice is being cooked, and the white rice absorbs these nutrients and flavour to enrich the white rice, and make a healthier white rice product as well as provide a healthy whole grain product.

Furthermore, consumers who prefer white rice and do not want to eat whole grain products, such as brown rice, are adapted to the flavour of brown rice through eating the enriched white rice.

By cooking the white rice at a lower temperature than the whole grain product, the extraction of nutrients from the whole grain product and absorption by the white rice is optimised leading to an efficient and fast process, that does not require prolonged soaking (such as 24 hours) of the whole grain product, that generates unpleasant odours and unhealthy bacteria.

Furthermore, the resulting enriched white rice is cooked to a specification as required by the consumer, and thus they are provided with finished white rice product that has the required flavour and appearance through the controlled transfer of the cooking fluid from the whole grain container to the white rice container under careful temperature control.

To put this another way, an apparatus is provided that in a fast and efficient manner extracts whole grain nutrients and flavour elements from a cooking whole grain product and enables the uptake of these by cooking white rice, where white rice does not normally contain these elements. Thus water soluble fibre, B vitamins and minerals including iron, and zinc can be added to white rice to improve the flavour and nutrient value, and in a way as required by the user.

Thus for example, some consumers can be provided with an enriched white rice product that is sticky and soft (a preference in North-East China for example), whilst some consumers can be provided with an enriched white rice product that is a little harder and non-sticky. The user can enter this preference via the input unit, and the apparatus cooks he whole grain product and white rice, with nutrients extracted from the whole grain product and added to the white rice with cooking profile as required to provide the required finished products. The user preference, for example can relate to the texture of the rice (hardness, adhesiveness, springiness, chewiness, and to taste (sweet, watery), and to colour, fragrance.

Additionally, final products can be provided to consumers with the required nutrients, flavours, more or less vitamin B extraction/absorption, more or less whole grain flavour (e.g. brown rice flavour).

In an example, the temperature in the first container during the first cooking period is greater than a temperature in the second container at the same time point by a magnitude that is less than or equal to 10C.

It has been found that an optimised quality of cooked white rice is provided when the whole grain product is cooked at a temperature that is a maximum of 10C greater than a temperature that the white rice is cooked. This provides for efficient extraction of nutrients and flavour from the whole grain product and the uptake of nutrients and flavour by the white rice, via fluid transferred from the container in which the whole grain product is being cooked to the container in which the white rice is being cooked.

This optimizes the gelatinization of starch located in the outer and inner of the grain granules providing for the efficient extraction of nutrients from the whole grain product and the associated uptake by the white rice.

In an example, during the first cooking period the processing unit is configured to control the first heater to heat the whole grain product through a first temperature profile.

In an example, during the first cooking period the processing unit is configured to control the second heater to heat the white rice through a second temperature profile.
In this way, the extraction phases of nutrients from the whole grain product and uptake by the white rice can be controlled during different cooking phases based on the required user preference, where the cooking profile of one product depends on that for the other.

Thus, the apparatus takes into account the physical makeup and structure of grain granules. For example, a gran granule can be approximated as a 3D sphere. Most of this is starch, including the surface and core of the granule. The extraction of nutrients from the whole grain product and absorption by white rice needs to take into account starch gelatinization, which is a function of temperature and water absorption with time. Thus, a surface of the granule can be in high gelatinization phase or in a pasting phase, which makes the surface of the granule very sticky and create a barrier for water penetration to the inner parts of the granule, leading to not enough water for the starch of the core of the granule and leading to not enough gelatinization. The outer parts of the granule can then be at a higher level of gelatinization, absorb too much water and swell and break. The apparatus manages the temperatures, according to the user preferences in order to provide a nutrient enriched white rice and whole grain product as required.

In an example, the first temperature profile comprises at least one period of time when the temperature in the first container is held constant.

In an example, the second temperature profile comprises at least one period of time when the temperature in the second container is held constant.

In an example, the at least one period of time when the temperature in the first container is held constant is the same as the at least one period of time when the temperature in the second container is held constant.

In an example, the processing unit is configured to dispense the at least some of the fluid from the first container to the second container during the at least one period of time when the temperature in the first container is held constant.

In an example, the processing unit is configured to dispense the at least some of the fluid from the first container to the second container during the at least one period of time when the temperature in the second container is held constant.

In an example, the apparatus comprises a water dispenser configured to dispense water to the first container. The processing unit is configured to control the water dispenser to add water to the first container during the first cooking period according to the user preference.

In an example, the water dispenser is configured to dispense water to the second container. The processing unit is configured to control the water dispenser to add water to the second container during the first cooking period according to the user preference

In this way, the apparatus can cook the whole grain product and provide the required nutrient enriched fluid to be transferred to the white rice container that takes into account how much whole grain product and how much white rice are initially placed into respective containers for cooking, and depending upon the required user preference. In this way, the required products in terms of colour, taste and nutrient value can be provided.

In an example, the total cooking period comprises a second cooking period that is after the first cooking period. The processing unit is configured to control the first and second heaters such that a temperature in the first container is the same as the temperature in the second container over a period of time during the second cooking period.

In an example, the whole grain product is one or more of: brown rice; purple rice; black rice; corn; conic seed; purple sweet potato; taro; cowpea; red rice; oats; sorghum; barley; wheat kernels; hyacinth pea; black millet; buckwheat; red beans.

According to a second aspect, there is provided a method for simultaneously cooking white rice and a whole grain product, comprising:
a) receiving by an input unit a user preference relating to cooked white rice;
b) containing in a first container a whole grain product and containing in the first container a fluid for cooking the whole grain product and wherein a first heater is configured to heat the first container;
c) containing in a second container white rice and containing in the second container a fluid for cooking the white rice and wherein a second heater is configured to heat the second container; wherein, the first container is positioned adjacent to the second container; and wherein a dispenser is in fluid communication with the first container and in fluid communication with the second container;
d) cooking under the control of a processing unit the whole grain rice and the white rice over a total cooking period according to the user preference, wherein the total cooking period comprises a first cooking period during which at least some of the fluid in the first container is dispensed to the second container; and
e) controlling by the processing unit the first and second heaters such that a temperature in the first container during the first cooking period is greater than a temperature in the second container at the same time point.

According to another aspect, there is provided a computer program element controlling apparatus as previously described which, when the computer program element is executed by processing unit, is adapted to perform the method steps as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of an apparatus for simultaneous cooking of white rice and a whole grain product;
Fig. 2 shows a method for simultaneous cooking of white rice and a whole grain product;
Fig. 3 shows nutritional profiles of whole grain (e.g. brown rice) and refined grain (e.g. white rice);
Fig. 4 shows a detailed schematic example of an apparatus for simultaneous cooking of white rice and a whole grain product;
Fig. 5 shows a detailed schematic example of an apparatus for simultaneous cooking of white rice and a whole grain product;
Fig. 6 shows a detailed example of a workflow for simultaneous cooking of white rice and a whole grain product; and
Fig. 7 shows a detailed example of a workflow for simultaneous cooking of white rice and a whole grain product.

### DETAILED DESCRIPTION OF EMBODIMENTS

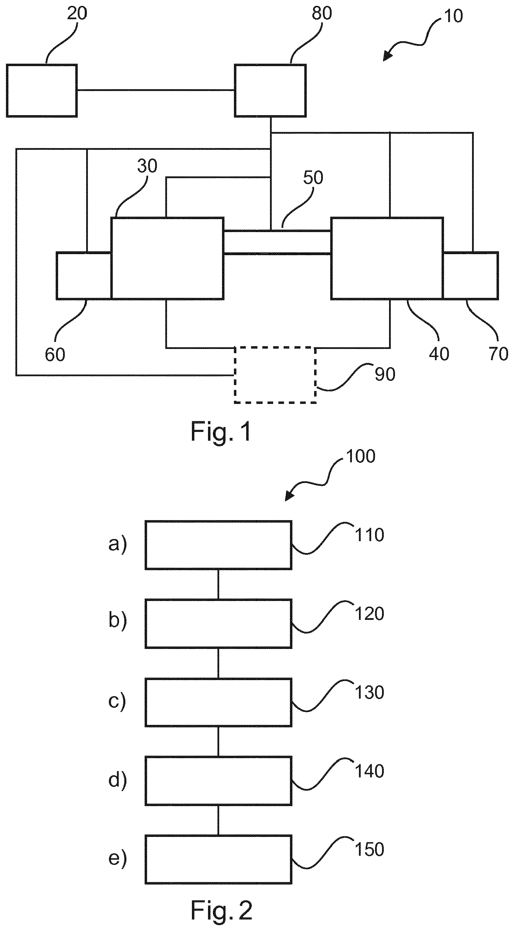

Fig. 1 shows an example of an apparatus 10 for the simultaneous cooking of white rice and a whole grain product. The apparatus 10 comprises an input unit 20, a first container 30, a second container 40, a dispenser 50, a first heater 60, a second heater 70, and a processing unit 80. The input unit 20 is configured to receive a user preference relating to cooked white rice. The first container 30 is configured to contain a whole grain product and contain a fluid for cooking the whole grain product. The second container 40 is configured to contain the white rice and contain a fluid for cooking the white rice. The first container 30 is positioned adjacent to the second container 40. The dispenser 50 is in fluid communication with the first container 30 and in fluid communication with the second container 40. The first heater 60 is configured to heat the first container 30. The second heater 70 is configured to heat the second container 40. The processing unit 80 is configured to cook the whole grain rice and the white rice over a total cooking period according to the user preference. The total cooking period comprises a first cooking period during which at least some of the fluid in the first container 30 is dispensed to the second container 40. The processing unit 80 is configured to control the first heater 60 and the second heater 70 such that a temperature in the first container 30 during the first cooking period is greater than a temperature in the second container 40 at the same time point.

In an example, the fluid in which the whole grain product and the white rice begins to be cooked in is water.

In an example, the temperature difference between the temperature at which the white rice is cooked and the whole grain product is cooked is determined in part by the user preference.

In other words, a family is provided with two main dishes, a whole gran dish and a white rice dish, where the dishes have the required taste, and appearance as required and where the white rice is healthier and tastier.

In an example, the apparatus is a rice cooker.

In an example, the apparatus is a multi-cooker.

In an example, the apparatus is an electronic pressure cooker.

According to an example, the temperature in the first container during the first cooking period is greater than a temperature in the second container at the same time point by a magnitude that is less than or equal to 10C.

According to an example, during the first cooking period the processing unit is configured to control the first heater to heat the whole grain product through a first temperature profile.

In an example, the temperature profile is determined in part by the user preference.

According to an example, during the first cooking period the processing unit is configured to control the second heater to heat the white rice through a second temperature profile.

In an example, the temperature profile is determined in part by the user preference.

According to an example, the first temperature profile comprises at least one period of time when the temperature in the first container is held constant.

In an example, the at least one period of time comprises a period of time when the temperature is held constant at 65C.

In an example, the at least one period of time comprises a period of time when the temperature is held constant at 70C.

In an example, the at least one period of time comprises a period of time when the temperature is held constant at 75C.

In an example, the at least one period of time comprises a period of time when the temperature is held constant at 80C.

In an example, the at least one period of time comprises a period of time when the temperature is held constant at 85C.

In an example, the at least one period of time comprises a period of time when the temperature is held constant at 90C.

In an example, the at least one period of time comprises a period of time when the temperature is held constant at 95C.

In an example, the at least one period of time comprises a period of time when the temperature is held constant at 100C.

In an example, the duration of the period of time and the magnitude of the temperature being held constant are determined in part by the user preference.

In this way, a high temperature can accelerate nutrient extraction, and help absorb the nutrients into the white rice granules in a manner that leads to the required final products for both the whole grain product and the enriched white rice.

By controlling temperatures in this manner, not only can nutrients be extracted and absorbed, but the texture of the final whole grain and white rice can be optimized as well. According to an example, the second temperature profile comprises at least one period of time when the temperature in the second container is held constant.

In an example, the duration of the period of time and the magnitude of the temperature being held constant are determined in part by the user preference.

According to an example, the at least one period of time when the temperature in the first container is held constant is the same as the at least one period of time when the temperature in the second container is held constant.

According to an example, the processing unit is configured to dispense the at least some of the fluid from the first container to the second container during the at least one period of time when the temperature in the first container is held constant.

According to an example, the processing unit is configured to dispense the at least some of the fluid from the first container to the second container during the at least one period of time when the temperature in the second container is held constant.

According to an example, the apparatus comprises a water dispenser 90 configured to dispense water to the first container. The processing unit is configured to control the water dispenser to add water to the first container during the first cooking period according to the user preference.

According to an example, the water dispenser is configured to dispense water to the second container. The processing unit is configured to control the water dispenser to add water to the second container during the first cooking period according to the user preference

According to an example, the total cooking period comprises a second cooking period that is after the first cooking period. The processing unit is configured to control the first and second heaters such that a temperature in the first container is the same as the temperature in the second container over a period of time during the second cooking period.

In an example, the temperatures are held constant during the second cooking period at a temperature of 90C.

In an example, the temperatures are held constant during the second cooking period at a temperature of 95C.

In an example, the temperatures are held constant during the second cooking period at a temperature of 100C.

According to an example, the whole grain product is one or more of: brown rice; purple rice; black rice; corn; conic seed; purple sweet potato; taro; cowpea; red rice; oats; sorghum; barley; wheat kernels; hyacinth pea; black millet; buckwheat; red beans.

The product to be cooked in the second container rather than being white rice can be an unrefined grain product.

Fig. 2 shows a method 100 for simultaneously cooking white rice and a whole grain product in its basic steps. The method 100 comprises:
in a receiving step 110, also referred to as step a), receiving by an input unit a user preference relating to cooked white rice;
in a containing step 120, also referred to as step b), containing in a first container a whole grain product and containing in the first container a fluid for cooking the whole grain product and a first heater is configured to heat the first container;
in a containing step 130, also referred to as step c), containing in a second container white rice and containing in the second container a fluid for cooking the white rice and a second heater is configured to heat the second container. The first container is positioned adjacent to the second container; and a dispenser is in fluid communication with the first container and in fluid communication with the second container;
in a cooking step 140, also referred to as step d), cooking under the control of a processing unit the whole grain rice and the white rice over a total cooking period according to the user preference. The total cooking period comprises a first cooking period during which at least some of the fluid in the first container is dispensed to the second container; and
in a controlling step 150, also referred to as step e), controlling by the processing unit the first and second heaters such that a temperature in the first container during the first cooking period is greater than a temperature in the second container at the same time point.

In an example, the temperature in the first container during the first cooking period is greater than a temperature in the second container at the same time point by a magnitude that is less than or equal to 10C.

In an example, the method comprises the processing unit controlling the first heater during the first cooking period and heating the whole grain product through a first temperature profile.

In an example, the method comprises the processing unit controlling the processing unit during the first cooking period and hating the white rice through a second temperature profile.

In an example, the first temperature profile comprises at least one period of time when the temperature in the first container is held constant.

In an example, the second temperature profile comprises at least one period of time when the temperature in the second container is held constant.

In an example, the at least one period of time when the temperature in the first container is held constant is the same as the at least one period of time when the temperature in the second container is held constant.

In an example, the method comprises the processing unit controlling the dispenser to dispense the at least some of the fluid from the first container to the second container during the at least one period of time when the temperature in the first container is held constant.

In an example, the method comprises the processing unit controlling the dispenser to dispense the at least some of the fluid from the first container to the second container during the at least one period of time when the temperature in the second container is held constant.

In an example, a water dispenser is configured to dispense water to the first container, and wherein the method comprises the processing unit controlling the water dispenser to add water to the first container during the first cooking period according to the user preference.

In an example, the water dispenser is configured to dispense water to the second container, and wherein the method comprises the processing unit controlling the water dispenser to add water to the second container during the first cooking period according to the user preference

In an example, the total cooking period comprises a second cooking period that is after the first cooking period, wherein the method comprises the processing unit controlling the first and second heaters such that a temperature in the first container is the same as the temperature in the second container over a period of time during the second cooking period.

In an example, the whole grain product is one or more of: brown rice; purple rice; black rice; corn; conic seed; purple sweet potato; taro; cowpea; red rice; oats; sorghum; barley; wheat kernels; hyacinth pea; black millet; buckwheat; red beans.

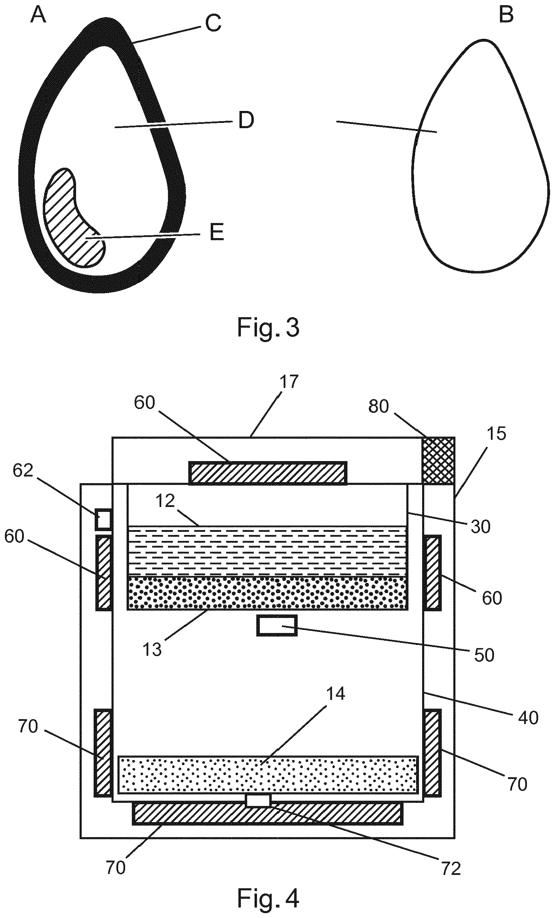

The apparatus and method for simultaneous cooking of white rice and a whole grain product are now described in more detail with respect to Figs. 3-7.

Fig. 3 and the table below show the nutritional profiles of whole grain, such as brown rice, and refined grain, such as white rice. Fig. 3 shows a whole grain on the left (labelled A) and a refined grain on the right (labelled B). The whole grain has bran "C", which is a fibre filled outer layer with 8 vitamins and minerals. Both the whole grain and refined grain have an endosperm "D", which is a starchy carbohydrate middle layer with some proteins and vitamins. The whole grain also has germ "E", which is a nutrient packed core with 8 vitamins, vitamin E, phytochemicals and healthy fats.

| | Nutrients content in raw brown rice |
|---|---|
| Dietary fibers | Total fiber: 3.4 g/100g |
| B vitamins | B1: 0.413 mg/100g, B2: 0.043 mg/100g, B6: 0.509 mg/100g, Niacin: 4.308 mg/100g |
| Protein | 7.5 g/100g |
| minerals | Ca: 33 mg/100g, Fe: 1.8 mg/100g, Mg: 143, P: 264, K: 268, Na: 4, Zn: 2.02, Cu: 0.277, Mn: 3.743 |

Consumers are generally encourages to eat more whole grain products, for higher nutritional provision, than eating purely white rice. However, many consumers don't like brown rice because of its coarse texture which is caused by its hard fibre layer, and some consumers hardly eat any brown rice. At home, different family members might have different needs with respect to rice, with some preferring brown rice, and some not. Normally, the rice cooker can only cook one type of rice, or consumers just mix brown rice and white rice in one pot and cook the mixture. However, this does not satisfy all family member's requirements. The described apparatus and method for the simultaneous cooking of white rice and a whole grain product addresses these issues.

The following relates to detailed descriptions of apparatuses (or cookers) for the simultaneous cooking of white rice and a whole grain product and workflows for the simultaneous cooking of white rice and a whole grain product.

Fig. 4 shows a detailed example of a cooker 10 for cooking brown rice and white rice. The cooker has a pot (container) 30 for whole grain (e.g. brown rice) 13 and a pot (container) 40 for a refined grain (e.g. white rice) 14. The cooker has a housing 15 and a lid 17. The first container is positioned above the second container and a dispenser (such as a valve) 50 is used to dispense fluid (water 12 with nutrients from the brown rice) to the second container under control of the cooker (via a control unit or processing unit) 80 to augment the nutritional profile of the white rice. Water 12 can be added to the containers at the start of the cooking process, but also added to the containers under control of the control unit during the cooking process. Heaters 60, 70 and temperature sensors 62, 72 are appropriately positioned with respect to both containers to heat them and sense the temperatures. The control unit, on the basis of a consumer request relating to what products are being cooked and what end result is required, controls the dispensing of fluid from the first to second container, the additions of water, and the brown and white rice cooking profiles in order to provide the required result, with a nutritionally enhanced white rice product. The cooker also has a lid, with all elements contained within a housing of the cooker. Some elements, such as the control unit can be external and an input unit such as a touch pad is used to enable the consumer to enter there cooking requirements as discussed above.

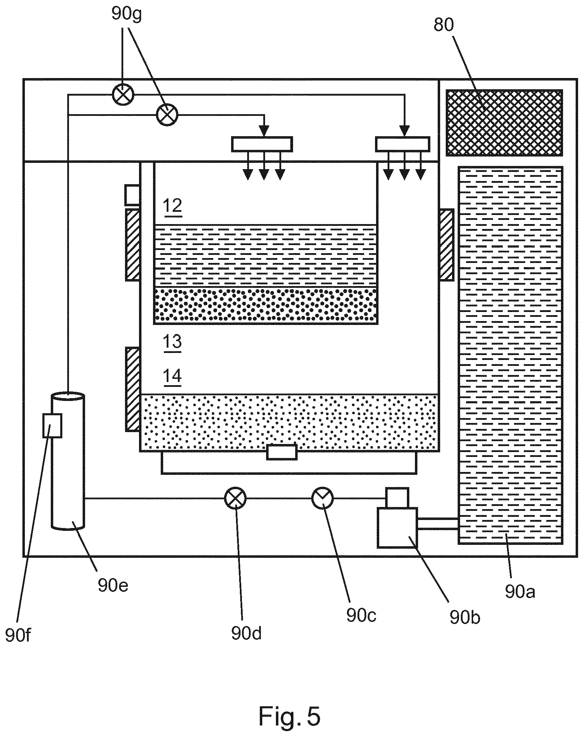

Fig. 5 shows a detailed example of another cooker 10 for cooking brown rice 13 and white rice 14. This operates in the same manner as that described for cooker shown in Fig. 4, with more detail being shown relating to the control of water 12 being added to the two containers, which is carried out by a water dispensing system 90, which is also termed a water dispenser. The water dispensing system 90 has a water tank 90a, a pump 90b, a flow meter 90c, a check valve 90d, a flow through heater 90e and associated temperature sensor 90f, and check valves 90g. Water, in terms of the amount, and its temperature and when it is added during the cooking of the brown rice and the white rice, is automatically fed to each container as required under control of the control unit. This is carried out as part of the required nutrient extraction, the required flavour extraction, and to ensure that the brown rice and white rice are correctly cooked. The amount of water to be added is based, in part, on the amount of brown rice and white rice to be cooked, and the cooker can have a weight sensor to determine the starting rice weights. Then, the control unit taking into account the consumers cooking requirements, calculates the water dosage for the complete cooking and how it is to be added to each container during different phases of cooking. Water feeding can however, be controlled manually.

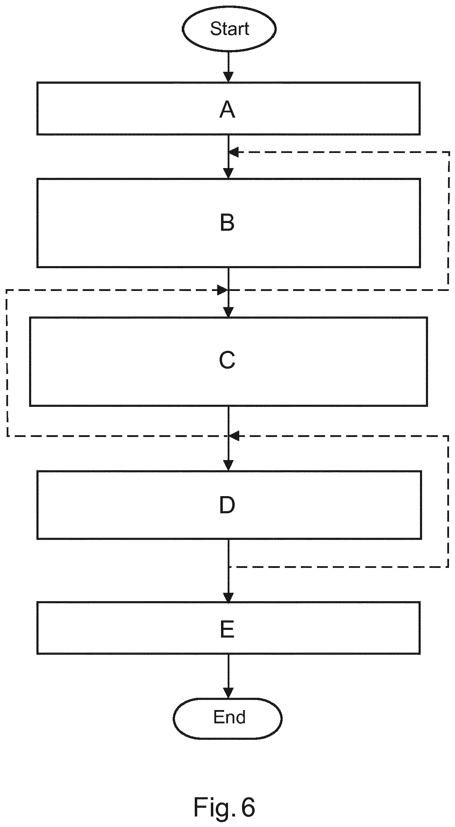

Fig. 6 shows a detailed workflow for how a cooker as shown in Figs. 4-5 can operate. The following steps apply, where feedback as indicated can apply:
A: Feed grains (e.g.: brown rice, white rice) to the respective containers,
B: Feed water automatically or manually with certain amount and temperature as defined by the cooking profile from control unit to the respective containers;
C: Extract nutrients based on nutrients extraction profile of brown rice: e.g.: start the heaters according to the nutrients extraction profile (e.g.: heat up to 70 C and hold for 15mins);
D: Dispense extracted nutrients and water to white rice pot according to dispensing profile (e.g: amount/time);
E: cooking Brown Rice and White Rice until Done.

### Nutrients extraction and dispensing, as part of the cooking process can involve:

Heating of the mixture of brown rice and water to 70C and holding this temperature for 15mins;
Dispensing of extraction liquid to the white rice.

### Nutrients extraction and dispensing, as part of the cooking process can involve:

Boling the mixture of brown rice and water for 5mins;
Dispensing of extraction liquid to the white rice.

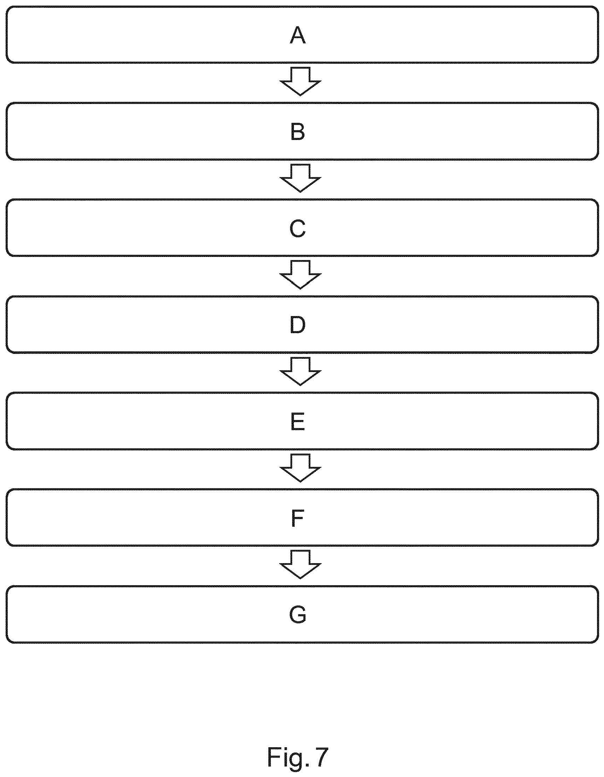

Fig. 7 shows a detailed workflow for how a cooker as shown in Figs. 4-5 can operate.

The following steps apply:
A: Feed grains (e.g.: brown rice, white rice) and water to the respective pot (water amount for brown rice=brown rice amount * 1.5+400ml, water amount for white rice=white rice amount *1.5-400ml);
B: Heat-up white rice and water mixture to Tw1 (e.g.:60C) and hold it by temperature sensor. Extraction 1: In the meanwhile, heat up brown rice water mixture to T1(e.g.: 70C) and hold for tl (e.g.:20mins) by temperature sensor);
C: Dispense 1: open the valve for D1 mins (e.g.: 10 second) or D1 ml (e.g.:250ml) controlled by flow meter sensor for instance;
D: In the meanwhile, heat-up white rice mixture to Tw2 (e.g.:90 C) and hold it;
E: Extraction 2: heat up brown rice water mixture to T2(e.g.:100 C) and hold for t2 (e.g.:5mins);
F: Dispense 2: open the valve for D2 mins (e.g.:6 second) or D2 ml (e.g.: 150ml);
G: Cooking Brown Rice and White Rice until Done (e.g.: for brown rice keep boiling for 20mins. In the meanwhile, heat-up white rice boiling and keep boiling for 20mins).

### Nutrients extraction and dispensing, as part of the cooking process can involve:

Heating the mixture of brown rice and water to 70C and holding this temperature for 10mins and then dispense a pre-set amount of liquid to the white rice container;
Second extraction is completed until Heating the mixture of brown rice and water to boiling point and holding for 5mins and then dispense a pre-set amount of liquid to white rice for cooking.

Nutrients extraction and dispensing, as part of the cooking process can involve other cookers and temperature and dispensing profiles to those described above, as made clear in the description above with respect to Figs 1-2.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An apparatus (10) for the simultaneous cooking of white rice and a whole grain product, comprising:
- an input unit (20);
- a first container (30);
- a second container (40);
- a dispenser (50);
- a first heater (60);
- a second heater (70); and
- a processing unit (80);
wherein, the input unit is configured to receive a user preference relating to cooked white rice;
wherein, the first container is configured to contain a whole grain product and contain a fluid for cooking the whole grain product;
wherein, the second container is configured to contain the white rice and contain a fluid for cooking the white rice;
wherein, the first container is positioned adjacent to the second container; wherein, the dispenser is in fluid communication with the first container and in fluid communication with the second container;
wherein, the first heater is configured to heat the first container;
wherein, the second heater is configured to heat the second container;
wherein, the processing unit is configured to cook the whole grain rice and the white rice over a total cooking period according to the user preference, wherein the total cooking period comprises a first cooking period during which at least some of the fluid in the first container is dispensed to the second container; and
wherein, the processing unit is configured to control the first and second heaters such that a temperature in the first container during the first cooking period is greater than a temperature in the second container at the same time point.

2. Apparatus according to claim 1, wherein the temperature in the first container during the first cooking period is greater than a temperature in the second container at the same time point by a magnitude that is less than or equal to 10C.

3. Apparatus according to any of claims 1-2, wherein during the first cooking period the processing unit is configured to control the first heater to heat the whole grain product through a first temperature profile.

4. Apparatus according to any of claims 1-3, wherein during the first cooking period the processing unit is configured to control the second heater to heat the white rice through a second temperature profile.

5. Apparatus according to any of claims 3-4, wherein the first temperature profile comprises at least one period of time when the temperature in the first container is held constant.

6. Apparatus according to any of claims 4-5, wherein the second temperature profile comprises at least one period of time when the temperature in the second container is held constant.

7. Apparatus according to claim 6, wherein the at least one period of time when the temperature in the first container is held constant is the same as the at least one period of time when the temperature in the second container is held constant.

8. Apparatus according to any of claims 5-7, wherein the processing unit is configured to dispense the at least some of the fluid from the first container to the second container during the at least one period of time when the temperature in the first container is held constant.

9. Apparatus according to any of claims 6-8, wherein the processing unit is configured to dispense the at least some of the fluid from the first container to the second container during the at least one period of time when the temperature in the second container is held constant.

10. Apparatus according to any of claims 1-9, wherein the apparatus comprises a water dispenser (90) configured to dispense water to the first container, and wherein the processing unit is configured to control the water dispenser to add water to the first container during the first cooking period according to the user preference.

11. Apparatus according to claim 10, wherein the water dispenser is configured to dispense water to the second container, and wherein the processing unit is configured to control the water dispenser to add water to the second container during the first cooking period according to the user preference

12. Apparatus according to any of claims 1-11, wherein the total cooking period comprises a second cooking period that is after the first cooking period, wherein the processing unit is configured to control the first and second heaters such that a temperature in the first container is the same as the temperature in the second container over a period of time during the second cooking period.

13. Apparatus according to any of claims 1-12, wherein the whole grain product is one or more of: brown rice; purple rice; black rice; corn; conic seed; purple sweet potato; taro; cowpea; red rice; oats; sorghum; barley; wheat kernels; hyacinth pea; black millet; buckwheat; red beans.

14. A method (100) for simultaneously cooking white rice and a whole grain product, comprising:
a) receiving (110) by an input unit a user preference relating to cooked white rice;
b) containing (120) in a first container a whole grain product and containing in the first container a fluid for cooking the whole grain product and wherein a first heater is configured to heat the first container;
c) containing (130) in a second container white rice and containing in the second container a fluid for cooking the white rice and wherein a second heater is configured to heat the second container; wherein, the first container is positioned adjacent to the second container; and wherein a dispenser is in fluid communication with the first container and in fluid communication with the second container;
d) cooking (140) under the control of a processing unit the whole grain rice and the white rice over a total cooking period according to the user preference, wherein the total cooking period comprises a first cooking period during which at least some of the fluid in the first container is dispensed to the second container; and
e) controlling (150) by the processing unit the first and second heaters such that a temperature in the first container during the first cooking period is greater than a temperature in the second container at the same time point.

15. A computer program element for controlling an apparatus according to one of claims 1 to 12, which when executed by a processor is configured to carry out the method of claim 14.
